# EUROPÄISCHE PATENTSCHRIFT

(11) **EP 4 038 271 B1**
(45) Veröffentlichungstag und Bekanntmachung des Hinweises auf die Patenterteilung: **28.08.2024**
(21) Anmeldenummer: 19783481.5
(22) Anmeldetag: 02.10.2019
(51) Int. Cl.: F03D 1/06

(54) **WINDENERGIEANLAGENROTORBLATT UND VERFAHREN ZUM VERBINDEN ZWEIER ROTORBLATTSEGMENTE**
WIND TURBINE ROTOR BLADE AND METHOD FOR CONNECTING TWO ROTOR BLADE SEGMENTS
PALE DE ROTOR D'ÉOLIENNE ET PROCÉDÉ DE LIAISON DE DEUX SEGMENTS DE PALE DE ROTOR

(43) Veröffentlichungstag der Anmeldung: 10.08.2022
(73) Patentinhaber: Nordex Energy SE & Co. KG, 22419 Hamburg (DE)
(72) Erfinder: FESTNER, Gerald, 19288 Klein Krams (DE); WACKROW, Torsten, 18119 Rostock (DE); TÖNISSEN, Nils, 18059 Rostock (DE)
(74) Vertreter: Epping - Hermann - Fischer
(86) Internationale Anmeldenummer: PCT/EP2019/076708
(87) Internationale Veröffentlichungsnummer: WO 2021/063495

(56) Entgegenhaltungen:
- EP-A1- 3 657 012
- CN-A- 102 606 419
- DE-A1- 102014 008 558
- JP-A- 2006 329 109
- US-A1- 2014 127 028
- US-A1- 2015 354 531

## Beschreibung

Die Erfindung betrifft ein Windenergieanlagenrotorblatt, welches durch zwei Rotorblattsegmente gebildet ist. Die Erfindung betrifft auch ein Verfahren zum Verbinden zweier Rotorblattsegmente.

Windenergieanlagen mit Windenergieanlagenrotorblättern (im Folgenden auch kurz: Rotorblätter) sind aus dem Stand der Technik vielfach bekannt und werden verwendet, um Windenergie in elektrische Energie umzuwandeln. Windenergieanlagen weisen eine Vielzahl von Bauteilen auf, die miteinander, etwa mittels einer Flanschverbindung, verbunden werden. Zum Beispiel im Bereich einer Rotorblattwurzel weisen die Rotorblätter einen Rotorblattanschluss mit einer Vielzahl von in das Laminat integrierten Lagerhülsen auf, über welche die Rotorblätter mittels Befestigungsschrauben bzw. Befestigungsschraubbolzen mit einem Lagerring eines sogenannten Pitchlagers oder mit einem mit dem Lagerring verbundenen Bauteil wie z.B. einem sogenannten Extender der Windenergieanlage verbunden werden. Die Lagerhülsen können Teil eines Flanscheinlegers für den Rotorblattanschluss sein. Ein derartiger Aufbau ist beispielsweise aus der internationalen Anmeldung WO 2015/124568 A1 bekannt.

Alternativ finden (Flansch-)Verbindungen auch bei der Verbindung von Rotorblattsegmenten Verwendung, die, der Länge nach angeordnet und zusammengefügt, ein Rotorblatt bilden. Ein solches Rotorblatt wird als geteiltes oder segmentiertes Rotorblatt bezeichnet. Beispielsweise befinden sich Lagerhülsen dann im Laminat eines Anschlussendes oder Teilungsflansches der Rotorblattsegmente. Die Rotorblattsegmente können mittels Schraubbolzen direkt oder über geeignete Zwischenstücke miteinander verbunden werden.

Geteilte Rotorblätter sind insbesondere aus Transportgründen zu bevorzugen und gewinnen vor allem aufgrund der steigenden Gesamtlänge von Rotorblättern zunehmend an Bedeutung.

CN 102 606 419 A betrifft ein segmentiertes Rotorblatt einer Windkraftanlage.

US 2015/354531 A1 betrifft eine Hülse für eine Blattwurzel eines Windturbinenrotorblatts, eine Blattwurzel, ein Windturbinenrotorblatt und eine Windturbine.

US 2014/127028 A1 betrifft einen Rotor für eine Windkraftanlage, bei dem ein Winturbinenrotorblatt und eine Nabe verbunden sind.

DE 10 2014 008558 A1 betrifft eine Rotorblattverbindung, insbesondere für laminierte Rotorblätter an der Rotornabe von Windenergieanlagen unter Verwendung von in der Rotorblattwurzel angeordneten Einsätzen.

JP 2006 329109 A betrifft ein segmentiertes Rotorblatt einer Windkraftanlage.

EP 3 657 012 A1 betrifft einen Zentrierstift zur Herstellung einer Flanschverbindung zwischen zwei Komponenten einer Windkraftanlage.

Eine Aufgabe, die der Erfindung zugrunde liegt, ist es, ein Konzept für geteilte Rotorblätter anzugeben, welches eine besonders vorteilhafte Verbindung von Rotorblattsegmenten gewährleistet.

Gemäß einem Aspekt wird ein Windenergieanlagenrotorblatt offenbart, das durch zwei Rotorblattsegmente gebildet wird. Mit anderen Worten handelt es sich um ein segmentiertes oder geteiltes Rotorblatt. Das erste Rotorblattsegment weist an einem ersten Anschlussende (auch Verbindungs- oder Kopplungsende) eine Mehrzahl von ersten Lagerhülsen auf, die jeweils ein erstes Innengewinde aufweisen. Das zweite Rotorblattsegment weist an einem dem ersten Anschlussende zugeordneten zweiten Anschlussende eine Mehrzahl von zweiten Lagerhülsen auf. Innerhalb der zweiten Lagerhülsen ist jeweils ein zweites Innengewinde angeordnet. Jedes zweite Innengewinde ist bezüglich einer Längsachse der entsprechenden zweiten Lagerhülse axial verschiebbar. In je ein Paar von zueinander fluchtenden ersten und zweiten Lagerhülsen ist ein Verbindungsbolzen in die beiden entsprechenden Innengewinde eingeschraubt, sodass die beiden Rotorblattsegmente an den Anschlussenden mechanisch miteinander verbunden sind.

Das beschriebene Windenergieanlagenrotorblatt ist durch zwei lösbar verbundene Rotorblattsegmente gebildet. Hierzu ist eine zu den jeweiligen ersten bzw. zweiten Lagerhülsen korrespondierende Anzahl von Verbindungsbolzen (auch Schraubbolzen) vorgesehen, die die beiden Anschlussenden verschrauben. Durch das Vorsehen eines beweglichen Innengewindes bei den Lagerhülsen des einen Rotorblattsegmentes wird eine Seite der Verbindung beider Rotorblattsegmente zu einem sogenannten "Loslager". Damit ist eine Seite der Bolzenschraubverbindung axial verschiebbar gelagert. Dadurch kann bei entsprechender Berücksichtigung der erforderlichen Einschraublänge jedes Verbindungsbolzens am entsprechenden anderen Rotorblattsegment spannungsfrei und werkzeuglos angesetzt werden. Diese Anordnung beziehungsweise Verbindung ermöglicht ein einfaches, insb. montagefreundliches, Fügen beider Blattsegmente. Insbesondere ist ein einfaches Einfädeln sämtlicher Bolzen bei der Montage der beiden Rotorblattsegmente ermöglicht. Insbesondere ist die Montage so angedacht, dass zunächst die Verbindungsbolzen in ein Anschlussende eingeschraubt werden, und anschließend die entsprechenden korrespondierenden Lagerhülsen des anderen Rotorblattsegments auf die Verbindungsbolzen aufgeschoben werden. Durch die axiale Verschiebbarkeit der zweiten Innengewinde wird das Einfädeln bei derartig großen Bauteilen wie Windenergieanlagenrotorblättern erheblich vereinfacht. Sämtliche Verbindungsbolzen können somit ohne Zwangskräfte montiert werden. Auch ein nachträgliches Verschrauben (Nachziehen) bzw. Warten der Verbindungen ist besonders einfach ermöglicht. Weiterhin wird eine Montage von der Innenbeziehungsweise Außenseite des Blattes möglich. Außerdem wird ein besonders leichtes Verbindungssystem ermöglicht, wodurch die Blattlasten insgesamt gering gehalten werden können.

Bei dem beschriebenen Windenergieanlagenrotorblatt ist eine besonders momentensteife Verbindung beider Blattsegmente ermöglicht. Es wird die Aufnahme und Weiterleitung von besonders hohen Zug- und Druckkräften des wurzelseitigen Segments von bzw. zu dem spitzenseitigen Segment ermöglicht. Weiterhin ermöglicht die beschriebene Verbindungsanordnung eine Kraftübertragung ausschließlich über den Verbindungsbolzen von einem Blattsegment in das zweite Blattsegment. Ein derartiger Kraftfluss wird auch als "In-Line" bezeichnet. Mit anderen Worten werden die Blattsegmente ohne Kraftumlenkungen wie bei exzentrischen Verschraubungen oder zug- oder biegebelasteten Zwischenstücken, lösbar gefügt. Ein derartiger Kraftfluss ermöglicht eine sehr gute Materialausnutzung und es wird zu einer geringen Neigung zum Klaffen der Verbindung und zu einer geringen Biegebelastung der Verschraubungen beigetragen, insbesondere im Gegensatz zu Flanschverbindungen. Weiterhin wird ein über den gesamten Verbindungsumfang gleichmäßiger Abstand der Lagerhülsen und damit Anschlussenden zueinander gewährleistet.

Das Windenergieanlagenrotorblatt ist in zumindest zwei Rotorblattsegmente geteilt, die in Längsrichtung angeordnet sind. Zwei oder mehr Teilungsstellen sind ebenso denkbar, wobei die weiteren Segmente analog zu dem beschriebenen Verbindungssystem mechanisch gekoppelt sein können.

Bei den ersten und zweiten Lagerhülsen handelt es sich beispielsweise um in die Anschlussenden der Blattsegmente einlaminierte Elemente. Es ist auch denkbar, dass die beiden Lagerhülsen durch Teilung einer Gesamthülse gebildet sind. In diesem Fall wird das Rotorblatt zunächst im Ganzen gefertigt, d.h. mit einteiliger Hülle bzw. Schale, und anschließend an einer Teilungsstelle getrennt, etwa geschnitten oder gesägt. Die Trennung erfolgt im Bereich der Gesamthülsen, so dass pro Gesamthülse zwei Hülsenhälften entstehen, je eine für die beiden durch Teilung entstandenen Blattsegmente. Diese Hülsenhälften entsprechen den erwähnten ersten bzw. zweiten Lagerhülsen. Die Lagerhülsen haben typischerweise eine Durchgangsbohrung bzw. -öffnung, wobei sich der Querschnitt, Konturen, Wandstärke oder Weiteres über die Längsachse der Hülsen teilweise ändert oder variiert. D.h. über die Länge weisen die Hülsen unterschiedliche Abschnitte auf.

Gemäß einer Ausführungsform ist jedes erste Innengewinde ortsfest bezüglich der entsprechenden ersten Lagerhülse. Mit anderen Worten ist das erste Innengewinde nicht verschiebbar oder beweglich und somit als Festlager ausgeführt. Beispielsweise ist das erste Innengewinde einstückig als Teil der Lagerhülse ausgebildet. Dadurch wird zu den oben genannten Vorteilen und Funktionen beigetragen, wobei insbesondere das Einschrauben der Bolzen bei der Montage in Kombination mit dem Loslager des anderen Blattsegmentes vereinfacht ist.

Gemäß einer Ausführungsform ist jedes erste Innengewinde bezüglich einer Längsachse der entsprechenden ersten Lagerhülse axial verschiebbar. Als Alternative zu der obigen Ausführungsform können die ersten Innengewinde ebenfalls axial verschiebbar sein und ermöglichen somit mehr Freiraum und axiales Spiel bei der Montage der beiden Rotorblattsegmente.

Gemäß einer Ausführungsform ist eine axiale Verschiebbarkeit jedes zweiten Innengewindes begrenzt. Analog ist die Verschiebbarkeit jedes ersten Innengewindes begrenzt, sollten diese ebenfalls beweglich ausgebildet sein. Die Begrenzung erfolgt beispielsweise durch zwei gegenüberliegende axiale Anschläge. Dies trägt zu einer einfachen und sicheren Montage der Bolzen in den Innengewinden und somit ein Verbinden der beiden Rotorblattsegmente bei.

Gemäß einer Ausführungsform weist jede zweite Lagerhülse einen axial verschiebbaren Gewindeeinsatz mit dem zweiten Innengewinde auf. Es handelt sich somit um einen beweglichen Gewindeeinsatz oder Gewindeeinleger. Der bewegliche Gewindeeinsatz ist beispielsweise vor einer Einlamination der Hülsen in das entsprechende Rotorblattsegment in die Hülse eingelegt. Der Gewindeeinsatz ermöglicht die Ausbildung als Loslager. Der Gewindeeinsatz ist im Inneren der Hülse angeordnet, d.h. in der Durchgangsbohrung oder einer entsprechenden Ausnehmung.

Gemäß einer Ausführungsform ist die äußere Formgebung jedes Gewindeeinsatzes an eine innere Formgebung der entsprechenden zweiten Lagerhülse derart angepasst, dass jeder Gewindeeinsatz durch Formschluss verdrehsicher in der entsprechenden zweiten Lagerhülse geführt ist. Die Gewindeeinsätze und somit die zweiten Innengewinde können somit bezüglich den Längsachsen der zweiten Lagerhülsen nicht verdreht werden. Damit ist beispielsweise sicher ermöglicht, dass die Bolzen entsprechend in den Gewindeeinsatz eingeschraubt werden können.

Gemäß einer Ausführungsform weist die äußere Formgebung eines jeden Gewindeeinsatzes eine Polygonform, insbesondere mit abgerundeten Kanten, auf. Eine derartige Ausgestaltung trägt dazu bei, dass der Gewindeeinsatz einfach hergestellt werden kann und eine geringe Kerbwirkung am entsprechenden Bauteil, nämlich der Lagerhülse, erzeugt wird.

Gemäß einer Ausgestaltung weist jeder Verbindungsbolzen einen Werkzeugangriffspunkt, insbesondere einen Sechskant, auf. Der Werkzeugangriffspunkt stellt ein Mittel oder eine Vorrichtung am Verbindungsbolzen dar, die das Angreifen eines Werkzeuges, wie etwa einen Schraubschlüssel oder eine Zange, ermöglicht, um die Verschraubung zu drehen.

Gemäß einer Ausführungsform ist zwischen den beiden Anschlussenden der beiden Rotorblattsegmente eine Mehrzahl von Druckstücken angeordnet, wobei jedes Druckstück als eine Hülse ausgebildet und auf einen entsprechenden Verbindungsbolzen aufgebracht ist. Mit anderen Worten sind zwischen den beiden Anschlussenden Druckstücke auf die Verbindungsbolzen montiert oder aufgeschoben. Im verbundenen Zustand der beiden Rotorblattsegmente sind die Druckstücke durch die Verschraubung der Verbindungsbolzen zwischen die Anschlussenden geklemmt. Die Anschlussenden sind somit in berührendem Kontakt mit den Druckstücken. Die Druckstücke sind koaxial um die Verbindungsbolzen herum auf die Bolzen montiert.

Die im betriebsgemäß montierten Zustand nebeneinander angeordneten Druckstücke sind beispielsweise Einzelstücke, d.h. voneinander unabhängig montiert. Zwei oder mehr solcher nebeneinander angeordneter Druckstücke sind alternativ untereinander verbunden. Beispielsweise bilden zwei oder mehr solcher Druckstücke eine steife Einheit, die als ein Teil auf die entsprechenden Bolzen aufgebracht werden. Alternativ sind beispielsweise sämtliche Druckstücke einer Seite, d.h. Saugseite oder Druckseite, verbunden. Auch können sämtliche Druckstücke untereinander verbunden sein, so dass nur eine Einheit montiert werden muss.

Die Druckstücke sind so ausgebildet, dass lediglich Druckkräfte auf diese wirken bzw. von diesen übertragen werden. Die Druckstücke nehmen keine Zugkräfte oder Biegemomente durch Kraftumlenkung auf. Die Vorspannkraft im Bolzen ist ausreichend groß, damit das Druckstück immer auf Druck belastet wird. Beispielsweise bei einer Biegung der Rotorblätter aufgrund von einwirkenden Windlasten findet keine Bewegung der Druckstücke relativ zu den Anschlussenden statt, etwa ein Gleiten (d.h. entlang einer zu den Längsachsen der Hülsen senkrechten Richtung), da diese fest mit den Anschlussenden in Verbindung stehen.

Die Druckstücke können auch in formschlüssigem Eingriff mit den Anschlussenden der Segmente stehen.

Dies hat zur Folge, dass die Zugkräfte im Wesentlichen ausschließlich über die Bolzen übertragen werden. Dies ist insofern vorteilhaft, da sehr lange Zugstäbe als Bolzen gewählt werden können, die günstig für Kräfte, Momente und Spannungen sind. Damit wird eine Übertragung der Zugkräfte nicht unterbrochen oder über andere Elemente, wie Schraubenköpfe oder Zwischenstücke umgeleitet. Des Weiteren wird ein hoher Gewindeabstand der ersten und zweiten Innengewinde ermöglicht, was sich wiederum günstig auf die übertragenden Zugkräfte auswirkt. Die Druckstücke selbst müssen somit geringere Lasten aushalten oder übertragen, was sich vorteilhaft auf eine Lebensdauer der Druckstücke auswirkt.

Gemäß einer Ausführungsform weist jedes Druckstück zumindest eine Öffnung auf, sodass der Werkzeugangriffspunkt über die Öffnung zugänglich ist. Die Öffnung kann auch als Freiraum oder Fenster bezeichnet werden und schafft Zugang zur Betätigung eines entsprechenden Bolzens.

Gemäß einer Ausführungsform sind die Öffnung begrenzende Wandungen eines jeden Druckstücks mit einer oder mehreren Fasen versehen. Dies erleichtert die Zugänglichkeit, indem der Freiraum vergrößert wird.

Gemäß einer Ausführungsform weisen die ersten Innengewinde das eine aus Rechts- oder Linksgewinde auf und die zweiten Innengewinde das jeweils andere. Dadurch kann durch Rotation des Bolzens dieser gleichzeitig in die Innengewinde der Lagerhülsen beider Anschlussenden eingeschraubt werden.

Es wird eine Lagerhülse für ein Windenergieanlagenrotorblatt gemäß dem ersten Aspekt offenbart. Innerhalb der Lagerhülse ist ein Innengewinde angeordnet, wobei das zweite Innengewinde bezüglich einer Längsachse der zweiten Lagerhülse axial verschiebbar ist.

Die Lagerhülse ermöglicht die oben genannten Vorteile und Funktionen. Es gilt das oben Gesagte analog.

Es wird auch ein Druckstück für ein Windenergieanlagenrotorblatt gemäß dem oben ersten Aspekt offenbart. Das Druckstück ist als eine Hülse ausgebildet, durch die ein Verbindungsbolzen durchführbar ist.

Gemäß einem zweiten Aspekt wird ein Verfahren zum Verbinden zweier Rotorblattsegmente eines Windenergieanlagenrotorblatts offenbart. Das erste Rotorblattsegment weist an einem ersten Anschlussende eine Mehrzahl von ersten Lagerhülsen auf, die jeweils ein erstes Innengewinde aufweisen. Das zweite Rotorblattsegment weist an einem dem ersten Anschlussende zugeordneten zweiten Anschlussende eine Mehrzahl von zweiten Lagerhülsen auf, die jeweils ein zweites Innengewinde aufweisen, wobei jedes zweite Innengewinde bezüglich einer Längsachse der entsprechenden zweiten Lagerhülse axial verschiebbar ist. Das Verfahren weist die Schritte auf:
- teilweises Einschrauben je eines Verbindungsbolzens in jeweils ein zweites Innengewinde des zweiten Anschlussendes derart, dass jeder Verbindungsbolzen mit einer vorbestimmten Länge aus dem zweiten Anschlussende herausragt,
- Heranführen des ersten Anschlussendes des ersten Rotorblattsegments an das zweite Anschlussende des zweiten Rotorblattsegments,
- teilweises Einschrauben der jeweiligen Verbindungsbolzen in jeweils ein erstes Innengewinde des ersten Anschlussendes,
- Zusammenschieben der beiden Rotorblattsegmente, und
- Festschrauben jedes Verbindungsbolzens derart, dass ein vorbestimmter Abstand zwischen einem auf dem Verbindungbolzen definierten Referenzpunkt und einem der beiden Anschlussenden erreicht ist.

Das Verfahren ermöglicht im Wesentlichen die vorgenannten Vorteile und Funktionen.

Zur Einhaltung der vorbestimmten Länge im Schritt des teilweisen Einschraubens in das zweite Innengewinde wird die Länge des herausstehenden Bolzens mit einem Sollwert abgeglichen. Beim Festschrauben eines Bolzens kann der Montagefortschritt kontinuierlich überwacht werden, indem beispielsweise der Referenzpunkt betrachtet wird, der infolge des Verschraubens zwischen den Anschlussenden wandert.

Aufgrund der axialen Verschiebbarkeit des zweiten Innengewindes kann jeder zumindest teilweise eingeschraubte Verbindungsbolzen bei der Montage einzeln verschoben werden.

Gemäß einer Ausführungsform wird nach dem Schritt des teilweisen Einschraubens der Verbindungsbolzen in die zweiten Innengewinde je ein Druckstück auf jeweils einen Verbindungsbolzen aufgebracht. Im Schritt des Festschraubens wird der vorbestimmte Abstand anhand eines Werkzeugangriffspunktes der Druckstücke als Referenzpunkt erreicht.

Weitere Vorteile, Merkmale und Weiterbildungen ergeben sich aus dem nachfolgenden, in Verbindung mit den Figuren erläuterten Ausführungsbeispiel. Gleiche, gleichartige oder gleich wirkende Elemente sind in den Figuren mit den gleichen Bezugszeichen versehen. Aus Gründen der Übersichtlichkeit sind gegebenenfalls nicht alle beschriebenen Elemente in sämtlichen Figuren mit zugehörigen Bezugszeichen gekennzeichnet.

In den Figuren zeigen:
Figur 1 eine schematische Darstellung einer Windenergieanlage,
Figur 2 eine schematische Darstellung eines geteilten Rotorblatts mit zwei Rotorblattsegmenten,
Figur 3 eine schematische Prinzipschnittdarstellung einer Bolzenverbindung zweier Rotorblattsegmente eines Rotorblatts gemäß dem Stand der Technik,
Figur 4 eine schematische Querschnittsansicht des Rotorblattes mit Bolzenverbindungen gemäß dem Ausführungsbeispiel der Erfindung, und
Figur 5 eine perspektivische Ansicht einer einzelnen Bolzenverbindung zwischen zwei Rotorblattsegmenten gemäß dem Ausführungsbeispiel der Erfindung,
Figur 6 eine schematische Querschnittsansicht der Bolzenverbindung gemäß Figur 5,
Figuren 7 bis 9 Detailansichten der Bolzenverbindung gemäß Figuren 5 und 6,
Figur 10 ein schematisches Ablaufdiagramm eines Verfahrens zum Herstellen des geteilten Rotorblattes gemäß einem Ausführungsbeispiel der Erfindung,
Figuren 11a und 11b einen Ausgangszustand bei der Montage des geteilten Rotorblattes.
Figuren 12a bis 12g und 13 zeigen verschiedene Montagezustände beim Verbinden zweier Rotorblattsegmente mit Bolzenverbindungen gemäß den Figuren 4 bis 9.

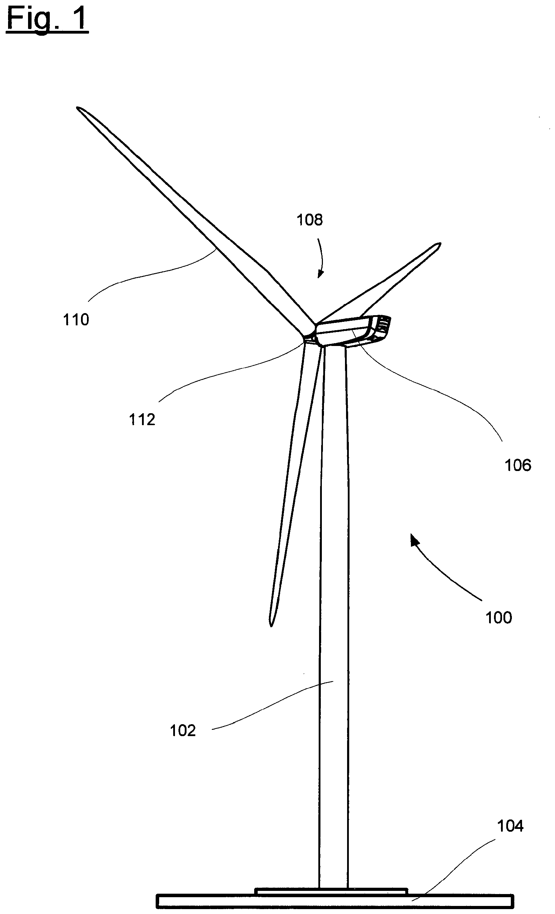

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

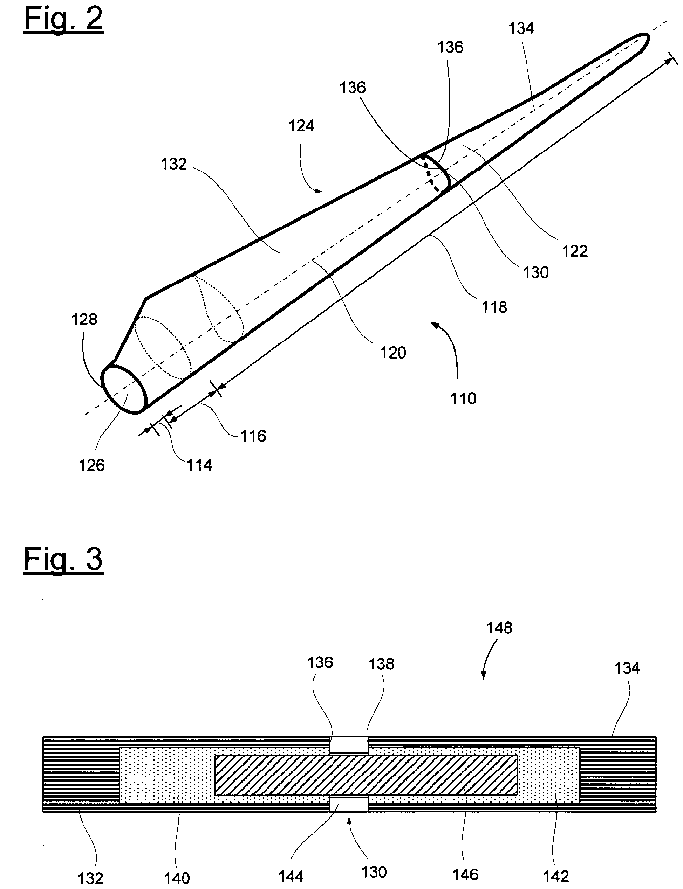

Figur 2 zeigt ein Windenergieanlagenrotorblatt 110. Das Rotorblatt 110 hat die Form eines herkömmlichen Rotorblattes und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat bezüglich einer Längserstreckungsrichtung 120 eine Druckseite 122 und eine gegenüberliegende Saugseite 124. Das Rotorblatt 110 ist im Inneren im Wesentlichen hohl ausgebildet.

Im Rotorblattwurzelbereich 114 ist ein Rotorblattanschlussende 126 mit einem Flanschanschluss 128 vorgesehen, mittels welchem das Rotorblatt 110 mit einem Pitchlager oder einem Extender mechanisch verbunden wird.

Das Rotorblatt 110 weist eine Teilungsstelle 130 auf, an welcher ein blattwurzelseitiges Rotorblattsegment 132 und ein blattspitzenseitiges Rotorblattsegment 134 miteinander verbunden sind. Hierzu weisen beide Segmente 132, 134 jeweils einen Rotorblattsegmentanschluss 136, 138 (auch Anschlussenden) auf. Das Rotorblatt 110 ist somit ein geteiltes Rotorblatt wie eingangs beschrieben. Jedes Anschlussende 136, 138 weist eine Vielzahl von Lagerhülsen auf, die dem Profil folgend angeordnet sind und Innengewinde für die Aufnahme von Schraubbolzen, auch Lagerbolzen oder Verbindungsbolzen genannt, aufweisen. Ein Anschlussende ist beispielsweise als ein Flanscheinleger realisiert, welcher als Einlegeteil in eine Fertigungsform zur Herstellung des Rotorblattes 110 eingelegt wird. Es ist jedoch auch denkbar, dass kein Flanscheinleger vorgesehen ist und die Lagerhülsen direkt in die Rotorblatthalbschalen eingebettet und einlaminiert werden. Bei den Lagerhülsen handelt es sich beispielsweise um Stahlhülsen. Im Folgenden wird die Verbindung beider Rotorblattsegmente 132, 134 genauer beschrieben, wobei Details exemplarisch anhand einer einzelnen Bolzenverbindung erläutert werden.

Figur 3 zeigt eine schematische Schnittansicht durch zwei verbundene Rotorblattsegmente 132, 134 entsprechend dem Stand der Technik, wobei eine einzelne Bolzenverbindung dargestellt ist. Das erste Anschlussende 136 des ersten Rotorblattsegments 132 weist eine Vielzahl von ersten Lagerhülsen 140, wie eingangs beschrieben auf. Das zweite Anschlussende 138 des zweiten Rotorblattsegments 134 weist eine Vielzahl von zweiten Lagerhülsen 142 auf. In jeweils ein Paar zueinander fluchtend angeordneter erster und zweiter Lagerhülsen 140, 142 ist ein Verbindungsbolzen 146 eingeschraubt, der die beiden Anschlussenden 136, 138 und somit die beiden Rotorblattsegmente 132, 134 mechanisch fest verbindet.

Zusätzlich ist zwischen die beiden Anschlussenden 136, 138 pro Bolzenverbindung 148 ein Druckstück 144 eingeklemmt.

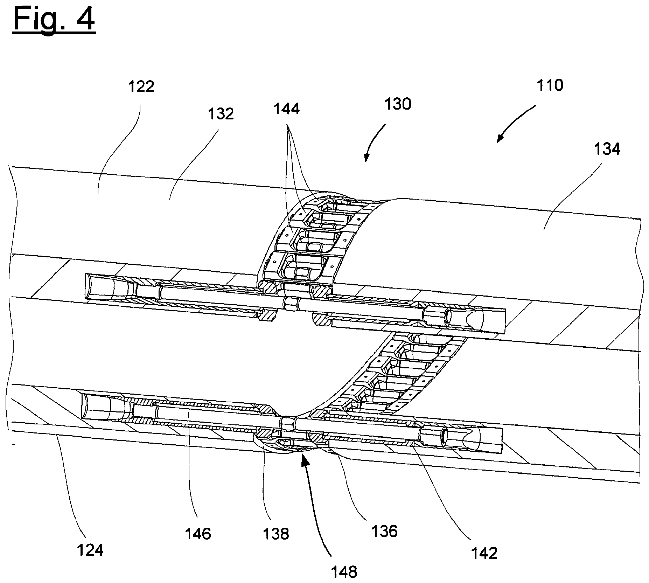

Figur 4 zeigt ein Rotorblatt 110 mit einem ersten Rotorblattsegment 132 und einem zweiten Rotorblattsegment 134 gemäß einem Ausführungsbeispiel der Erfindung im Bereich der Teilungsstelle 130 in einer perspektivischen Ansicht. Dabei sind an der Saugseite 124 und an der Druckseite 122 eine Vielzahl von Bolzenverbindungen 148 zu erkennen, bei denen jeweils Druckstücke 144 zum Einsatz kommen. Dabei ist jeweils eine Bolzenverbindung 148 geschnitten dargestellt, wobei zu erkennen ist, dass ein Verbindungsbolzen 146 als durchgehender Bolzen ausgeführt ist, der beide Anschlussenden 136, 138 verbindet.

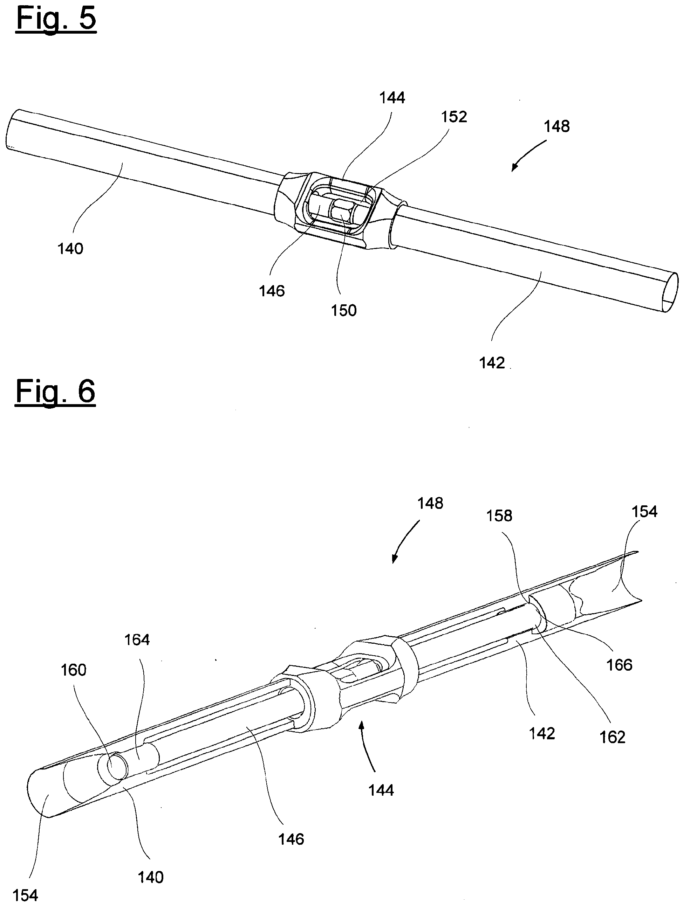

Die Figuren 5 bis 9 zeigen eine einzelne Bolzenverbindung 148 des Rotorblatts 110 im Detail.

Figur 5 stellt eine erste und eine zweite Lagerhülse 140 und 142 dar, in die ein Verbindungsbolzen 146 eingeschraubt ist, wobei zwischen den Lagerhülsen 140 und 142 ein Druckstück 144 angeordnet ist. Das Druckstück 144 ist als eine Art Hülse ausgebildet und auf dem Verbindungsbolzen 146 angeordnet. Jeder Verbindungsbolzen 146 weist einen Werkzeugangriffspunkt 150 (hier ein Sechskant in geeigneter, typischer Schlüsselweite) auf, der über eine Öffnung 152 im Druckstück 144 zugänglich ist.

Figur 6 zeigt die Bolzenverbindung 148 in einer perspektivischen, schematischen Schnittansicht. Die Lagerhülsen 140 und 142 weisen jeweils eine durchgängige Öffnung 154 auf, in die der Verbindungbolzen 146 zumindest teilweise eingeführt ist. Zum Verschrauben mit dem Verbindungsbolzen 146 weisen die ersten Lagerhülsen 140 ein erstes Innengewinde 156 und die zweiten Lagerhülsen 142 ein zweites Innengewinde 158 auf. Die ersten Innengewinde 156 sind als Rechtsgewinde und die zweiten Innengewinde 158 als Linksgewinde ausgebildet. Der Verbindungsbolzen 146 weist an seinen gegenüberliegenden Enden 160, 162 entsprechende Außengewinde 164, 166 auf. Die ersten Innengewinde 156 sind ortsfest und im Beispiel einstückig mit den ersten Lagerhülsen 140 ausgebildet. Die zweiten Innengewinde 158 sind axial verschiebbar, wie noch beschrieben wird. Die das zweite Innengewinde 158 aufweisende Lagerhülse 142 ist in dem ersten Rotorblattsegment 132 angeordnet. Dieses kann rotorblattspitzenseitig oder rotorblattwurzelseitig angeordnet sein.

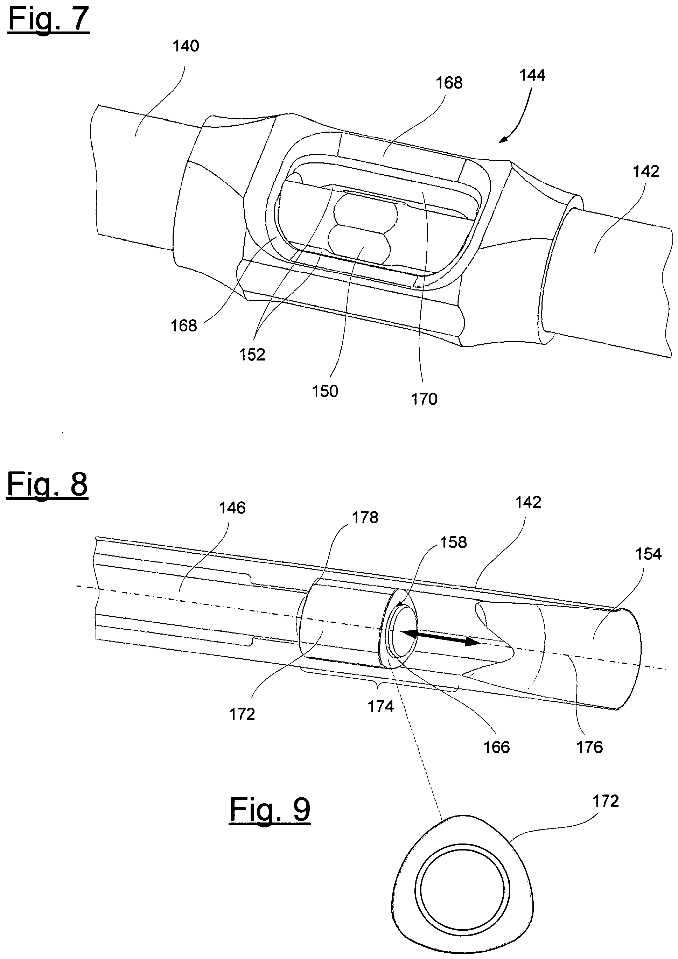

Figur 7 zeigt im Detail das Druckstück 144. Das Druckstück weist mehrere Fasen 168 an den die Öffnung 152 begrenzenden Wandungen 170 auf. Dies optimiert die Öffnung 152 platztechnisch und somit den Zugang für ein Werkzeug zum Ansetzen an dem Werkzeugangriffspunkt 150.

Figur 8 zeigt Details des zweiten Innengewindes 158. Das zweite Innengewinde 158 ist Teil eines Gewindeeinsatzes 172, der in einem entsprechenden Abschnitt 174 der durchgängigen Öffnung 154 in der zweiten Lagerhülse 142 angeordnet ist. Der Gewindeeinsatz 172 ist axial bezüglich einer Längsachse 176 der zweiten Lagerhülse 142 im Abschnitt 174 verschiebbar (siehe Doppelpfeil). Die axiale Verschiebbarkeit ist beidseitig entlang der Längsachse 176 begrenzt, etwa mittels eines dem zweiten Anschlussende 138 zugewandten äußeren Anschlagselement 178 und eines dem zweiten Anschlussende 138 abgewandten, inneren Anschlagselements (nicht dargestellt in Figur 8).

Figur 9 zeigt die Formgebung des Gewindeeinsatzes 172, wobei die äußere Formgebung einer Polygonform P3G mit abgerundeten Kanten entspricht. Der Abschnitt 174, der auch als Ausnehmung bezeichnet werden kann, ist hinsichtlich seiner inneren Formgebung an die äußere Formgebung des Gewindeeinsatzes 172 angepasst, wobei ein Formschluss ausgebildet ist, so dass der Gewindeeinsatz 172 verdrehsicher in der zweiten Lagerhülse 142 verschiebbar geführt ist.

Die beschriebene Bolzenverbindung 148, die in einer Vielzahl bei dem geteilten Rotorblatt 110 vorgesehen ist, ermöglicht die eingangs genannten Vorteile und Funktionen.

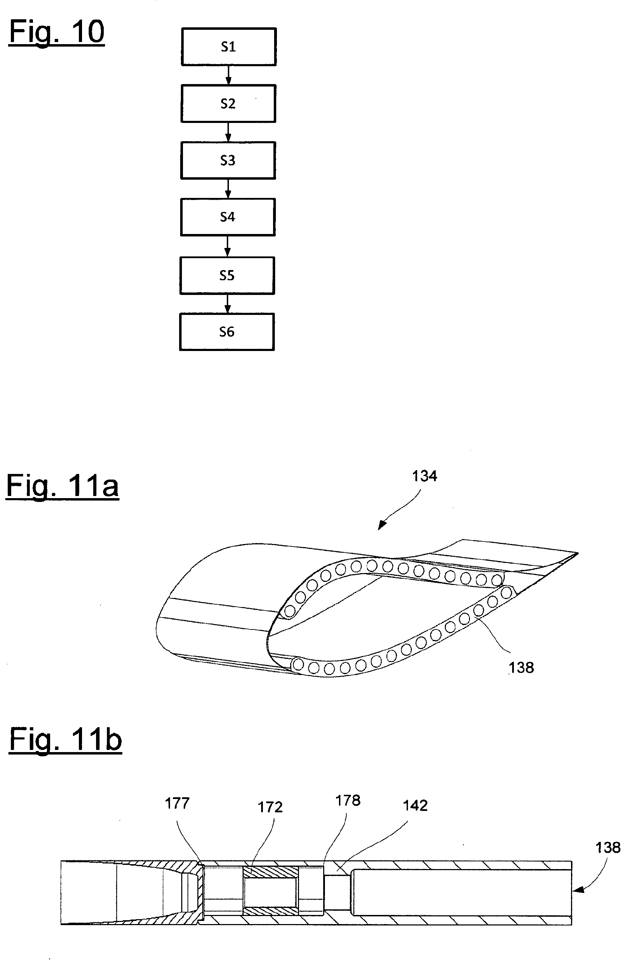

Im Folgenden wird ein Verfahren zum Verbinden der beiden Rotorblattsegmente 132 und 134 des geteilten Rotorblatts 110 gemäß einem Ausführungsbeispiel der Erfindung anhand der Figuren 10 bis 13 beschrieben. Figur 10 zeigt ein schematisches Ablaufdiagramm des Verfahrens, während Figuren 11 bis 13 verschiedene Montagezustände zeigen.

Zunächst befindet sich ein Rotorblattsegment (hier das zweite Rotorblattsegment 134) in einer Ausgangssituation (s. Figur 11a). In dieser Situation liegt der Gewindeeinsatz 172 der zweiten Lagerhülsen 142 irgendwo an einer Position zwischen einem inneren Anschlagselement 177 und einem äußeren Anschlagselement 178 (s. Figur 11b).

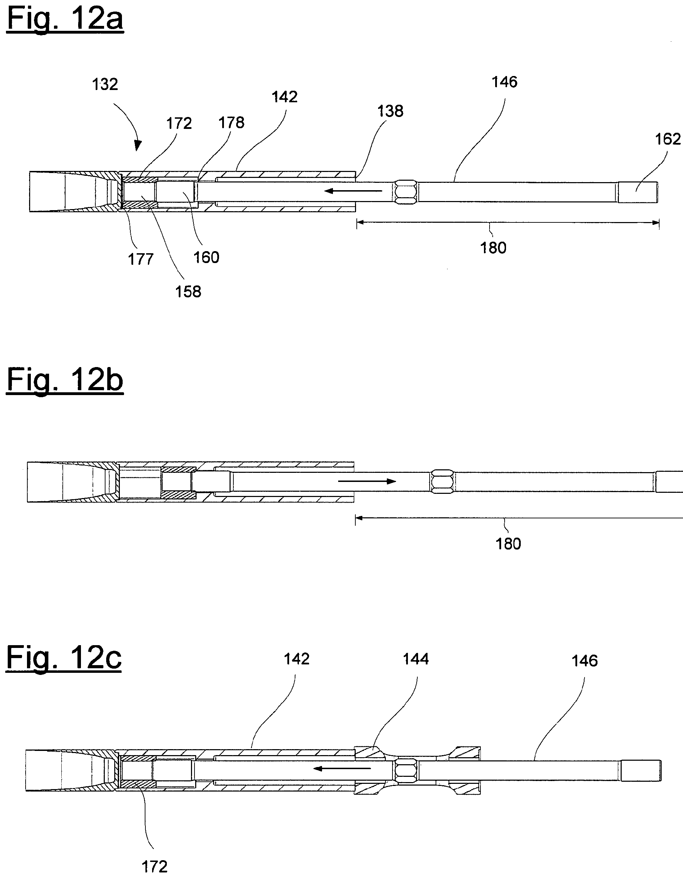

In einem ersten Schritt S1 (s. Figuren 12a und 12b) werden die Verbindungsbolzen 146 teilweise in die zweiten Innengewinde 158 des zweiten Rotorblattsegments 134 eingeschraubt, wobei der Gewindeeinsatz 172 gegen den zweiten, inneren Anschlag 177 gedrückt wird. Der Verbindungsbolzen 146 kann eine Markierung aufweisen bis zu der er eingeschraubt wird. Dabei ragt jeder Verbindungsbolzen 146 mit einer vorbestimmten Länge 180 aus dem zweiten Anschlussende 138 heraus. Alternativ kann zur Überprüfung einer vorbestimmten Länge 180 der Verbindungsbolzen 146 aus dem zweiten Anschlussende 138 herausgezogen werden bis der Gewindeeinsatz 172 am äußeren Anschlagselement 178 anliegt. Die vorbestimmte Länge 180 wird mit einem vorgegebenen Sollwert abglichen, um eine korrekte Montage sicherzustellen. Dies ist entscheidend, damit später eine ausreichende Gewindeüberdeckung beider Innengewinde 156, 158 erreicht wird. Die Zuordnung des richtigen Bolzenendes 160, 162 bzw. des richtigen Außengewindes 164, 166 folgt aus den unterschiedlichen Gewinden (Rechts- bzw. Linksgewinde) pro Rotorblattsegment 132, 134.

In einem nächsten Schritt S2 (s. Figur 12c) werden die Druckstücke 144 auf die Verbindungsbolzen 146 aufgeschoben, wobei die Verbindungsbolzen 146 nach innen verschoben werden. Dies ist daran zu erkennen, dass die Gewindeeinsätze 172 zu dem inneren Anschlagselement 177 hinbewegt werden.

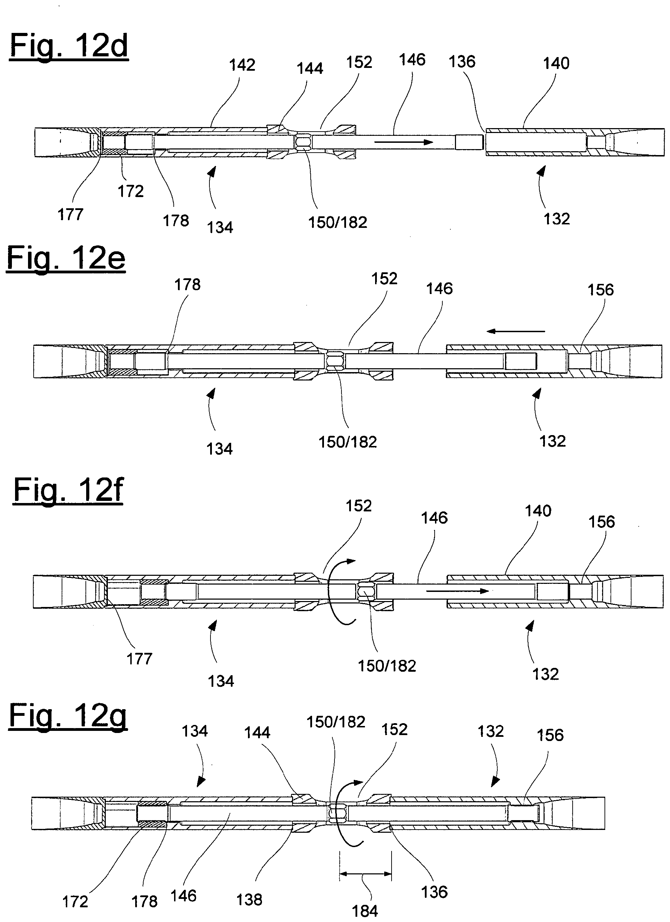

In einem nächsten Schritt S3 (s. Figur 12d) wird das erste Rotorblattsegment 132 bzw. das erste Anschlussende 136 an das zweite Anschlussende 138 soweit herangeführt, dass es die Verbindungsbolzen 146 fast berührt. Die Gewindeeinsätze 172 sind dabei bis an den inneren Anschlag 177 in die zweiten Lagerhülsen 142 des zweiten Rotorblattsegments 134 hineingeschoben. Anschließend werden die Verbindungsbolzen 146 nacheinander aus den zweiten Lagerhülsen 142 herausgezogen und jeweils in eine zu der entsprechenden zweiten Lagerhülse 142 fluchtende erste Lagerhülse 140 eingefädelt.

In einem nächsten Schritt S4 (s. Figuren 12e und 12f) wird das erste Rotorblattsegment 132 in Richtung des zweiten Rotorblattsegments 134 bewegt bis die Verbindungsbolzen 146 auf ein vorbestimmtes Maß in den ersten Innengewinden 156 der ersten Lagerhülsen 140 eingeschraubt sind.

In einem nächsten Schritt S5 (nicht dargestellt) werden die beiden Rotorblattsegmente 132, 134 auf Anschlag zusammengeschoben, wobei die Anschlussenden 136, 138 an den Druckstücken 144 anliegen und der Gewindeeinsatz 172 wieder an dem inneren Anschlag 177 anliegt. Aufgrund der axialen Verschiebbarkeit der zweiten Innengewinde 158 mittels der Gewindeeinsätze 172 ("Loslager") sind die nötigen axialen (und auch radialen) Spiele zum Einfädeln und Montieren vorhanden. Insbesondere ist der Innendurchmesser der Hülse ist größer als der Außendurchmesser des Gewindeeinsatzes.

In einem nächsten Schritt S6 (s. Figur 12g) werden die Verbindungsbolzen 146 festgeschraubt. Dabei werden die beiden Anschlussenden 136, 138 zueinander festgezogen, wobei auch die Gewindeeinsätze 172 gegen die äußeren Anschlagselemente 178 anschlagen. Das Verschrauben erfolgt mittels eines geeigneten Werkzeugs, welches an den jeweiligen Werkzeugangriffspunkten 150 ansetzt. Beim Festschrauben wird jeder Werkzeugangriffspunkt 150 als Referenzpunkt 182 verwendet, um das Fortschreiten der Montage zu überprüfen. Dieser "wandert" je nach Montagezustand innerhalb des jeweiligen Druckstücks 144, was über die Öffnung 152 überwacht werden kann.

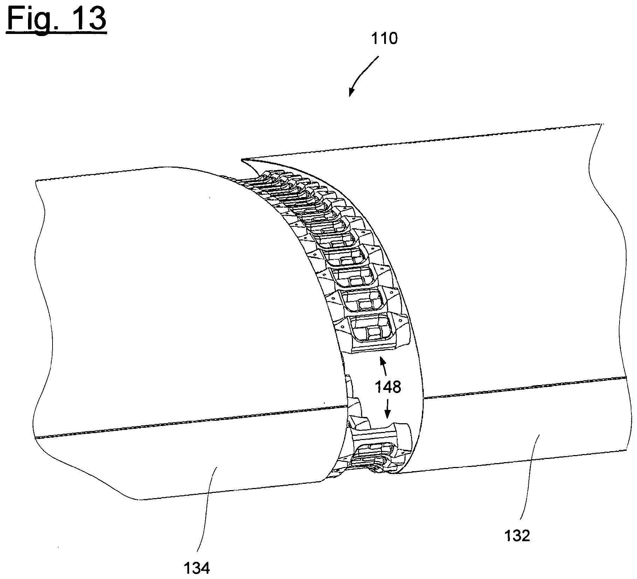

Die Figuren 12g und 13 zeigen den finalen Montagezustand. Hier sollte ein vorbestimmter Abstand 184 zwischen dem ersten Anschlussende 136 und jedem Referenzpunkt 182 vorherrschen.

Es sei an dieser Stelle erwähnt, dass die obigen Ausführungen auch für ein geteiltes Rotorblatt mit zwei oder mehr Teilungsstellen 130 gleichermaßen gelten. In diesem Fall würde das geteilte Rotorblatt drei oder mehr Rotorblattsegmente aufweisen.

### BEZUGSZEICHENLISTE

- 100: Windenergieanlage
- 102: Turm
- 104: Fundament
- 106: Gondel
- 108: Rotor
- 110: Rotorblatt
- 112: Rotornabe
- 114: Rotorblattwurzelbereich
- 116: Übergangsbereich
- 118: Profilbereich
- 120: Längserstreckungsrichtung
- 122: Druckseite
- 124: Saugseite
- 126: Rotorblattanschlussende
- 128: Flanschanschluss
- 130: Teilungsstelle
- 132: erstes Rotorblattsegment
- 134: zweites Rotorblattsegment
- 136: erstes Anschlussende
- 138: zweites Anschlussende
- 140: erste Lagerhülse
- 142: zweite Lagerhülse
- 144: Druckstück
- 146: Verbindungsbolzen
- 148: Bolzenverbindung
- 150: Werkzeugangriffspunkt
- 152: Öffnung
- 154: durchgängige Öffnung
- 156: erstes Innengewinde
- 158: zweites Innengewinde
- 160: erstes Ende
- 162: zweites Ende
- 164: erstes Außengewinde
- 166: zweites Außengewinde
- 168: Fase
- 170: Wandung
- 172: Gewindeeinsatz
- 174: Abschnitt der zweiten Lagerhülse
- 176: Längsachse
- 177: inneres Anschlagelement
- 178: äußeres Anschlagselement
- 180: vorbestimmte Länge
- 182: Referenzpunkt
- 184: vorbestimmter Abstand
- S1 bis S6: Schritte

## Patentansprüche

1. Windenergieanlagenrotorblatt (110), welches durch zwei Rotorblattsegmente (132, 134) gebildet ist, wobei
das erste Rotorblattsegment (132) an einem ersten Anschlussende (136) eine Mehrzahl von ersten Lagerhülsen (140) aufweist, die jeweils ein erstes Innengewinde (156) aufweisen,
das zweite Rotorblattsegment (134) an einem dem ersten Anschlussende (136) zugeordneten zweiten Anschlussende (138) eine Mehrzahl von zweiten Lagerhülsen (142) aufweist,
innerhalb derer jeweils ein zweites Innengewinde (158) angeordnet ist, wobei jedes zweite Innengewinde (158) bezüglich einer Längsachse (176) der entsprechenden zweiten Lagerhülse (142) axial verschiebbar ist, und
in je ein Paar von zueinander fluchtenden ersten und zweiten Lagerhülsen (140, 142) ein Verbindungsbolzen (146) in die beiden entsprechenden Innengewinde (156, 158) eingeschraubt ist, so dass die beiden Rotorblattsegmente (132, 134) an den Anschlussenden (136, 138) mechanisch miteinander verbunden sind.

2. Windenergieanlagenrotorblatt nach Anspruch 1, wobei jedes erste Innengewinde (156) ortsfest bezüglich der entsprechenden ersten Lagerhülse (140) ist.

3. Windenergieanlagenrotorblatt nach Anspruch 1, wobei jedes erste Innengewinde (156) bezüglich einer Längsachse (176) der entsprechenden ersten Lagerhülse (140) axial verschiebbar ist.

4. Windenergieanlagenrotorblatt (110) nach einem der vorhergehenden Ansprüche, wobei eine axiale Verschiebbarkeit jedes zweiten Innengewindes (158) begrenzt ist.

5. Windenergieanlagenrotorblatt (110) nach einem der vorhergehenden Ansprüche, wobei jede zweite Lagerhülse (142) einen axial verschiebbaren Gewindeeinsatz (172) mit dem zweiten Innengewinde (158) aufweist.

6. Windenergieanlagenrotorblatt (110) nach Anspruch 5, wobei eine äußere Formgebung jedes Gewindeeinsatzes (172) an eine innere Formgebung der entsprechenden zweiten Lagerhülse (142) derart angepasst ist, dass jeder Gewindeeinsatz (172) durch Formschluss verdrehsicher in der entsprechenden zweiten Lagerhülse (142) geführt ist.

7. Windenergieanlagenrotorblatt (110) nach Anspruch 6, wobei die äußere Formgebung eines jeden Gewindeeinsatzes (172) eine Polygonform, insbesondere mit abgerundeten Kanten, aufweist.

8. Windenergieanlagenrotorblatt (110) nach einem der vorhergehenden Ansprüche, wobei jeder Verbindungsbolzen (146) einen Werkzeugangriffspunkt (150), insbesondere einen Sechskant, aufweist.

9. Windenergieanlagenrotorblatt (110) nach einem der vorhergehenden Ansprüche, wobei zwischen den beiden Anschlussenden (136, 138) der beiden Rotorblattsegmente (132, 134) eine Mehrzahl von Druckstücken (144) angeordnet ist, wobei jedes Druckstück (144) als eine Hülse ausgebildet und auf einen entsprechenden Verbindungsbolzen (146) aufgebracht ist.

10. Windenergieanlagenrotorblatt (110) nach den Ansprüchen 8 und 9, wobei jedes Druckstück (144) zumindest eine Öffnung (152) aufweist, so dass der Werkzeugangriffspunkt (150) über die Öffnung (152) zugänglich ist.

11. Windenergieanlagenrotorblatt (110) nach Anspruch 10, wobei die Öffnung (152) begrenzende Wandungen (170) eines jeden Druckstücks (144) mit einer oder mehreren Fasen (168) versehen sind.

12. Windenergieanlagenrotorblatt (110) nach einem der vorhergehenden Ansprüche, wobei die ersten Innengewinde (156) das eine aus Rechts- oder Linksgewinde aufweisen und die zweiten Innengewinde (158) das andere.

13. Verfahren zum Verbinden zweier Rotorblattsegmente (132, 134) eines Windenergieanlagenrotorblatts (110), wobei das erste Rotorblattsegment (132) an einem ersten Anschlussende (136) eine Mehrzahl von ersten Lagerhülsen (140) aufweist, die jeweils ein erstes Innengewinde (156) aufweisen, und
das zweite Rotorblattsegment (134) an einem dem ersten Anschlussende (136) zugeordneten zweiten Anschlussende (138) eine Mehrzahl von zweiten Lagerhülsen (142) aufweist, die jeweils ein zweites Innengewinde (158) aufweisen, wobei jedes zweite Innengewinde (158) bezüglich einer Längsachse (176) der entsprechenden zweiten Lagerhülse (142) axial verschiebbar ist,
das Verfahren aufweisend die Schritte:
teilweises Einschrauben je eines Verbindungsbolzens (146) in jeweils ein zweites Innengewinde (158) des zweiten Anschlussendes (138) derart, dass jeder Verbindungsbolzen (146) mit einer vorbestimmten Länge (180) aus dem zweiten Anschlussende (138) herausragt,
Heranführen des ersten Anschlussendes (136) des ersten Rotorblattsegments (132) an das zweite Anschlussende (138) des zweiten Rotorblattsegments (134),
teilweises Einschrauben der jeweiligen Verbindungsbolzen (146) in jeweils ein erstes Innengewinde (156) des ersten Anschlussendes (136),
Zusammenschieben der beiden Rotorblattsegmente (132, 134), und
Festschrauben jedes Verbindungsbolzens (146) derart, dass ein vorbestimmter Abstand (184) zwischen einem auf dem Verbindungbolzen (146) definierten Referenzpunkt (182) und einem der beiden Anschlussenden (136, 138) erreicht ist.

14. Verfahren nach Anspruch 13, wobei nach dem Schritt des teilweisen Einschraubens der Verbindungsbolzen (146) in die zweiten Innengewinde (158) je ein Druckstück (144) auf jeweils einen Verbindungsbolzen (146) aufgebracht wird, und wobei im Schritt des Festschraubens der vorbestimmte Abstand (184) anhand eines Werkzeugangriffspunktes (150) der Druckstücke (144) als Referenzpunkt (182) erreicht wird.

## Claims

1. Wind turbine rotor blade (110), which is formed by two rotor blade segments (132, 134), wherein the first rotor blade segment (132) has a plurality of first bearing sleeves (140) at a first terminal end (136), each of which has a first internal thread (156),
the second rotor blade segment (134) has a plurality of second bearing sleeves (142) at a second connection end (136) assigned to the first terminal (136), within each of which a second internal thread (158) is arranged, wherein each second internal thread (158) is axially displaceable with respect to a longitudinal axis (176) of the corresponding second bearing sleeve (142), and
into each pair of first and second bearing sleeves (140, 142) a connecting bolt (146) is screwed into the two corresponding internal threads (156, 158), so that the two rotor blade segments (132, 134) are mechanically connected to each other at the connection ends (136, 138).

2. Wind turbine rotor blade (110) according to claim 1, wherein each first internal thread (156) is in a fixed position with respect to the corresponding first bearing sleeve (140).

3. Wind turbine rotor blade (110) according to claim 1, wherein each first internal thread (156) is axially displaceable with respect to a longitudinal axis (176) of the corresponding first bearing sleeve (140).

4. A wind turbine rotor blade (110) according to any of the preceding claims, wherein an axial displaceability of every second internal thread (158) is limited.

5. Wind turbine rotor blade (110) according to any one of the preceding claims, wherein every second bearing sleeve (142) has an axially movable thread insert (172) including the second internal thread (158).

6. Wind turbine rotor blade (110) according to claim 5, wherein an external shape of each threaded insert (172) is adapted to an internal shape of the corresponding second bearing sleeve (142) in such a way that each threaded insert (172) is guided in a manner secured against rotation via a form fit in the corresponding second bearing sleeve (142).

7. Wind turbine rotor blade (110) according to claim 6, wherein the outer shape of each threaded insert (172) has a polygonal shape, in particular with rounded edges.

8. Wind turbine rotor blade (110) according to any one of the preceding claims, wherein each connecting bolt (146) has a tool engagement point (150), in particular a hexagon.

9. Wind turbine rotor blade (110) according to one of the preceding claims, wherein between the two connection ends (136, 138) of the two rotor blade segments (132, 134) a plurality of pressure pieces (144) is arranged, each pressure piece (144) being formed as a sleeve and applied to a corresponding connecting bolt (146).

10. Wind turbine rotor blade (110) according to claims 8 and 9, wherein each pressure piece (144) has at least one opening (152) so that the tool engagement point (150) is accessible via the opening (152).

11. Wind turbine rotor blade (110) according to claim 10, wherein the opening (152) limiting walls (170) of each pressure piece (144) are provided with one or more chamfers (168) .

12. Wind turbine rotor blade (110) according to any one of the preceding claims, wherein the first internal threads (156) have one of right-hand or left-hand threads and the second internal threads (158) the other.

13. Method for joining two rotor blade segments (132, 134) of a wind turbine rotor blade (110), wherein the first rotor blade segment (132) has a plurality of first bearing sleeves (140) at a first connection end (136), each of which has a first internal thread (156), and
the second rotor blade segment (134) has a plurality of second bearing sleeves (142) at a second connection end (136) assigned to the first connection end (136), of which each have a second internal thread (158), wherein every second internal thread (158) is axially displaceable with respect to a longitudinal axis (176) of the corresponding second bearing sleeve (142),
the method comprising the steps:
partial screwing of each connecting bolt (146) into a respective second internal thread (158) of the second connection end (138) in such a way that each connecting bolt (146) protrudes from the second connection end (138) with a predetermined length (180),
bringing the first connection end (136) of the first rotor blade segment (132) to the second connection end (138) of the second rotor blade segment (134),
partial screwing of the respective connecting bolts (146) into a first internal thread (156) of the first connection end (136),
pushing the two rotor blade segments (132, 134) together,
and
Screwing each connecting bolt (146) in such a way that a predetermined distance (184) is achieved between a reference point (182) defined on the connecting bolt (146) and one of the two connection ends (136, 138).

14. The method of claim 13, wherein, after the step of partial screwing of the connecting bolts (146) into the second internal threads (158), one pressure piece (144) is applied to one connecting bolt (146) each, and wherein in the step of screwing the predetermined distance (184) is achieved by means of a tool engagement point of application (150) of the pressure pieces (144) as a reference point (182).

## Revendications

1. Pale de rotor d'éolienne (110), laquelle est formée par deux segments de pale (132, 134), sachant que
le premier segment de pale de rotor (132) présente à une première extrémité de raccordement (136) une pluralité de premières douilles de palier (140) qui présentent respectivement un premier filetage intérieur (156),
le deuxième segment de pale de rotor (134) présente à une deuxième extrémité de raccordement (138) affectée à la première extrémité de raccordement (136) une pluralité de deuxièmes douilles de palier (142) à l'intérieur desquelles respectivement un deuxième filetage intérieur (158) est disposé, sachant que chaque deuxième filetage intérieur (158) est translatable axialement par rapport à un axe longitudinal (176) de la deuxième douille de palier (142) correspondante, et
dans respectivement une paire de premières et de deuxièmes douilles de palier (140, 142) en alignement l'une par rapport à l'autre, un boulon de liaison (146) est vissé dans les deux filetages intérieurs (156, 158) correspondants de telle sorte que les deux segments de pale de rotor (132, 134) soient reliés mécaniquement l'un à l'autre aux extrémités de raccordement (136, 138).

2. Pale de rotor d'éolienne selon la revendication 1, sachant que chaque premier filetage intérieur (156) est stationnaire par rapport à la première douille de palier (140) correspondante.

3. Pale de rotor d'éolienne selon la revendication 1, sachant que chaque premier filetage intérieur (156) est translatable axialement par rapport à un axe longitudinal (176) de la première douille de palier (140) correspondante.

4. Pale de rotor d'éolienne (110) selon l'une des revendications précédentes, sachant qu'une capacité de translation axiale de chaque deuxième filetage intérieur (158) est limitée.

5. Pale de rotor d'éolienne (110) selon l'une des revendications précédentes, sachant que chaque deuxième douille de palier (142) présente un insert de filetage (172) translatable axialement avec le deuxième filetage intérieur (158) .

6. Pale de rotor d'éolienne (110) selon la revendication 5, sachant qu'un façonnage extérieur de chaque insert de filetage (172) est adapté à un façonnage intérieur de la deuxième douille de palier (142) correspondante de telle manière que chaque insert de filetage (172) soit guidé par complémentarité de forme de manière bloquée en rotation dans la deuxième douille de palier (142) correspondante.

7. Pale de rotor d'éolienne (110) selon la revendication 6, sachant que le façonnage extérieur de chaque insert de filetage (172) présente une forme de polygone, en particulier à bords arrondis.

8. Pale de rotor d'éolienne (110) selon l'une des revendications précédentes, sachant que chaque boulon de liaison (146) présente un point d'attaque d'outil (150), en particulier un hexagone.

9. Pale de rotor d'éolienne (110) selon l'une des revendications précédentes, sachant qu'entre les deux extrémités de raccordement (136, 1368) des deux segments de pale de rotor (132, 134), une pluralité de pièces de pression (144) est disposée, sachant que chaque pièce de pression (144) est constituée comme douille et apposée sur un boulon de liaison (146) correspondant.

10. Pale de rotor d'éolienne (110) selon les revendications 8 et 9, sachant que chaque pièce de pression (144) présente au moins une ouverture (152) de telle sorte que le point d'attaque d'outil (150) soit accessible via l'ouverture (152) .

11. Pale de rotor d'éolienne (110) selon la revendication 10, sachant que des parois (170) délimitant l'ouverture (152) de chaque pièce de pression (144) sont pourvues d'un ou de plusieurs chanfreins (168).

12. Pale de rotor d'éolienne (110) selon l'une des revendications précédentes, sachant que les premiers filetages intérieurs (156) présentent l'un d'un filetage droit ou d'un filetage gauche, et le deuxième filetage intérieur (158), l'autre.

13. Procédé de liaison de deux segments de pale de rotor (132, 134) d'une pale de rotor d'éolienne (110), sachant que le premier segment de pale de rotor (132) présente à une première extrémité de raccordement (136) une pluralité de premières douilles de palier (140) qui présentent respectivement un premier filetage intérieur (156), et
le deuxième segment de pale de rotor (134) présente à une deuxième extrémité de raccordement (138) affectée à la première extrémité de raccordement (136) une pluralité de deuxièmes douilles de palier (142) qui présentent respectivement un deuxième filetage intérieur (158), sachant que chaque deuxième filetage intérieur (158) est translatable axialement par rapport à un axe longitudinal (176) de la deuxième douille de palier (142) correspondante, et
le procédé présentant les étapes :
vissage partiel de respectivement un boulon de liaison (146) dans respectivement un deuxième filetage intérieur (158) de la deuxième extrémité de raccordement (138) de telle manière que chaque boulon de liaison (146) dépasse de la deuxième extrémité de raccordement (138) à raison d'une longueur prédéterminée (180),
guidage de la première extrémité de raccordement (136) du premier segment de pale de rotor (132) contre la deuxième extrémité de raccordement (138) du deuxième segment de pale de rotor (134),
vissage partiel des boulons de liaison (146) respectifs dans respectivement un premier filetage intérieur (156) de la première extrémité de raccordement (136),
assemblage des deux segments de pale de rotor (132, 134), et
serrage de chaque boulon de liaison (146) de telle manière qu'une distance (184) prédéterminée entre un point de référence (182) défini sur le boulon de liaison (146) et une des deux extrémités de raccordement (136, 138) soit atteinte.

14. Procédé selon la revendication 13, sachant qu'après l'étape de vissage partiel des boulons de liaison (146) dans les deuxièmes filetages intérieurs (158), respectivement une pièce de pression (144) est apposée sur respectivement un boulon de liaison (146), et sachant qu'à l'étape de serrage, la distance (184) prédéterminée est atteinte à l'aide d'un point d'attaque d'outil (150) des pièces de pression (144) comme point de référence.
